# EUROPÄISCHE PATENTSCHRIFT

(11) **EP 0 440 760 B1**
(45) Veröffentlichungstag und Bekanntmachung des Hinweises auf die Patenterteilung: **31.03.1993**
(21) Anmeldenummer: 90911784.8
(22) Anmeldetag: 09.07.1990
(51) Int. Cl.: E04C 2/32, B32B 5/12, B29D 24/00, B29C 67/14

(54) **DREIDIMENSIONALES STRUKTURELEMENT**
THREE-DIMENSIONAL STRUCTURAL ELEMENT
ELEMENT DE CONSTRUCTION TRIDIMENSIONNEL

(30) Priorität: 31.07.1989 CH 2842/89
(43) Veröffentlichungstag der Anmeldung: 14.08.1991
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9001110
(87) Internationale Veröffentlichungsnummer: WO9102129

(56) Entgegenhaltungen:
- EP-A- 0 250 005
- DE-A- 3 020 595
- DE-A- 3 729 633
- US-A- 4 536 440
- H.P. Thiel "Erklär mir die Welt", R. Piper & Co Verlag, München, Zürich, 8. Auflage, 1982, Seiten 98 und 99

## Beschreibung

Die Erfindung betrifft ein dreidimensionales Strukturelement, welches als ein an sich ebenes Gebilde senkrecht zu seiner Erstreckung Auswölbungen, wie Näpfchen, Stege od.dgl. aufweist.

### Stand der Technik

Unter einem dreidimensionalen Strukturelement wird auch ein z.B. einem Eierkarton ähnliches Gebilde verstanden.

Aus der DE-A-3.729.633 ist ein dreidimensionales Strukturelement bekannt, welches durch Tiefziehen von wenigstens einer mit Kunstharz imprägnierten Schicht einer Maschenware und einer Fasermatte hergestellt ist. Solche dreidimensionalen Strukturelemente, dort "Strukturwabe" genannt, eignen sich insbesondere als Kernmaterial zur Herstellung flächenförmiger Sandwichkörper.

Generell können solche Strukturelemente als Abstandhalter eingesetzt werden, wobei sie bei kleinem Gewicht relativ stabil und steif sind.

Dieses bekannte Strukturelement wird dadurch erhalten, daß auf eine Bahn aus Maschenware eine aus einem Vlies oder aus in flächiger Form angeordneten einzelnen Stapelfasern bestehende Fasermatte gelegt wird, gegebenenfalls die Fasermatte noch mit einer weiteren Bahn einer Maschenware abgedeckt wird und die kombinierten Bahnen nach Imprägnieren mit einem Kunstharz oder einer entsprechenden Lösung oder Emulsion der Wirkung einer Tiefziehvorrichtung unter glei hzeitiger Erwärmung unterworfen werden.

Seine Steifheit erhält das bekannte Strukturelement erst durch das Aushärten des Kunstharzes. Die Verwendung einer oder mehrerer Bahnen von Maschenware und von Kunstharzen macht das Produkt relativ teuer.

Beim Tiefziehen der Bahnen aus Maschenware werden die Fäden der Maschenware gegeneinander verschoben, die Fäden behalten dabei in der Regel ihre ursprüngliche Länge bei. Gemäß der DE-A-3.729.633 weisen die bekannten Strukturelemente bis zu über 50 Gewichts-% an Kunstharzen, z.B. Phenol-Formaldehyd-Resol-Harze auf, während die Maschenware nur weniger als 25 Gewichts-% des Produktes ausmacht. Ein solches Produkt ist deshalb sowohl bei der Herstellung, als auch bei der späteren Vernichtung des Produktes aus Umweltschutzgründen problematisch.

### Problem

Der Erfindung liegt das Problem zugrunde, eine gattungsgemäBes Strukturelement zu schaffen, das in der Herstellung billiger ist und trotzdem mindestens gleich gute Festigkeitseigenschaften aufweist.

### Erfindung

Diese Aufgabe wird durch ein im Anspruch 1 beschriebenes Strukturelement gelöst.

### Vorteilhafte Wirkungen der Erfindung

Eine schrumpfbare Schlitzfolie zur Herstellung eines Kunststoffnetzes ist z.B. aus der DE-C-1.919.876 bekannt. Bei dieser Folie kann es sich um eine Klebefolie handeln.

Das Gebilde kann aus zwei Kunststoffnetzen, vorzugsweise unterschiedlicher Ausgestaltung, Materialien, od.dgl., bestehen. Es kann aber auch aus mindestens einer Lage eines Netzes und aus einer Lage eines Vlieses, eines Vliesstoffes, eines Fadengeleges, einer Schaumstoff-Folie, eines offenporigen Schaumes oder einer geschlitzten Aluminiumfolie bestehen. Die zusätzlichen Lagen können an dem Kunststoffnetz angeklebt oder angeschweißt sein, wobei die Kleb- bzw. Schweißbarkeit des Kunststoffnetzes ausgenutzt wird.

Werden mindestens zwei geschlitzte Kunststoff-Folien benutzt, so können die Schlitze in den beiden Folien senkrecht zueinander ausgerichtet sein. Es können auch zwei vorher hergestellte Kunststoffnetze sein, die quer zueinander ausgerichtet sind.

Alternativ hierzu kann das Gebilde aus drei Lagen bestehen, von denen z.B. die mittlere Lage ein Netz ist und die beiden anderen Lagen aus einem oder aus zwei anderen Materialien bestehen oder von denen die beiden äußeren Lagen je ein Netz sind und die mittlere Lage aus einem anderen Material besteht.

Die Ausbildung hängt von den jeweils gewünschten Eigenschaften ab.

Gemäß einer vorteilhaften Ausgestaltung ist mindestens auf einer Seite des Gebildes auf den Auswölbungen desselben eine ebene Lage angeordnet. Zwischen den Auswölbungen und dieser ebenen Lage entsteht ein Hohlraum oder eine Vielzahl von Hohlräumen, die entweder leer sind oder mit einem Füllmaterial gefüllt sein können.

Soll das Gebilde zusätzlich verstärkt ausgebildet sein, so kann es durch ein von diesem aufgesaugtes und ausgehärtetes Material, wie Epoxyharz od.dgl. versteift sein.

Als Material für das Netz werden Polyolefine benutzt. Das Material kann Polyamid, Polypropylen, Polyäthylen, Polyester oder eine Kombination aus diesen Materialien sein. Diese Materialien lassen sich besonders gut zu einem Netz schrumpfen.

Die Öffnungen des Netzes können mit einem weiteren Material ausgefüllt sein, so daß das Strukturelement nicht nur eine Verstärkung erhält, sondern, je nach Material, auch für Feststoffe, Flüssigkeiten und / oder Gase undurchlässig ist.

Dazu enthält das die Öffnungen des Netzes ausfüllende Material vorteilhafterweise ein Bindemittel.

Die Auswölbungen des Gebildes können mit einem weiteren Material, wie abgebundenem Gips, Zement, Beton, Holzmehlslurry ausgefüllt sein.

Die Herstellung eines erfindungsgemäßen Strukturelementes kann dabei folgendermaßen erfolgen:
Eine schrumpfbare Kunststoff-Folie, die gegebenenfalls mit einer oder mehreren Bahnen eines anderen Materiales verbunden ist, wird geschlitzt, wobei die Schlitze z.B. in Reihen angeordnet sind und Schlitze benachbarter Reihen gegeneinander versetzt angeordnet sind (vgl. auch DE-C-1.919.876). Diese geschlitzte Bahn wird einem Schrumpfungsprozeß unterworfen, wodurch sich die Schlitze der Kunststoff-Folie zu einer Netzstruktur öffnen. Vor dem Abkühlen oder auch danach wird die Bahn zu der gewünschten Form tiefgezogen.

Beim Tiefziehen des Gebildes wird zumindest das Netz aus Kunststoff zum Teil gereckt bzw. gestreckt. Dadurch verändert sich die Molekülstruktur im Netz. Das Tiefziehen kann kalt oder unter Hitzeeinwirkung durchgeführt werden.

## Patentansprüche

1. Dreidimensionales Strukturelement, welches als an sich ebenes Gebilde senkrecht zu seiner Erstreckung Auswölbungen, wie Näpfchen, stege od.dgl. aufweist, dadurch gekennzeichnet, daß das Gebilde wenigstens ein Netz aus einer geschrumpften Schlitzfolie aus einem Kunststoff aufweist.

2. Strukturelement nach Anspruch 1, dadurch gekennzeichnet, daß die schlitzfolie eine Klebefolie ist.

3. Strukturelement nach einem der vorhergehenden Ansprüche, dadurch gekennzeichnet, daß das Gebilde aus zwei Kunststoffnetzen, vorzugsweise unterschiedlicher Ausgestaltung, Materialien, od.dgl., besteht.

4. Strukturelement nach Anspruch 3, dadurch gekennzeichnet, daß die beiden Netze quer zueinander ausgerichtet sind.

5. Strukturelement nach einem der vorhergehenden Ansprüche, dadurch gekennzeichnet, daß das Gebilde aus mindestens einer Lage eines Netzes und aus einer Lage eines Vlieses, eines Vliesstoffes, eines Fadengeleges, einer Schaumstoff-Folie, eines offenporigen Schaumes oder einer geschlitzten Aluminiumfolie besteht.

6. Strukturelement nach Anspruch 5, dadurch gekennzeichnet, daß das Gebilde aus drei Lagen besteht, von denen die mittlere Lage ein Netz ist und die beiden anderen Lagen aus einem oder aus zwei anderen Materialien bestehen.

7. Strukturelement nach Anspruch 5, dadurch gekennzeichnet, daß das Gebilde aus drei Lagen besteht, von denen die beiden äußeren Lagen je ein Netz sind und die mittlere Lage aus einem anderen Material besteht.

8. Strukturelement nach einem der vorhergehenden Ansprüche, dadurch gekennzeichnet, daß mindestens auf einer Seite des Gebildes auf den Auswölbungen desselben eine ebene Lage angeordnet ist.

9. Strukturelement nach einem der vorhergehenden Ansprüche, dadurch gekennzeichnet, daß das Gebilde durch ein von diesem aufgesaugtes und ausgehärtetes Material, wie Epoxyharz od.dgl. versteift ist.

10. Strukturelement nach einem der vorhergehenden Ansprüche, dadurch gekennzeichnet, daß das Netz aus Polyolefin besteht.

11. Strukturelement nach einem der vorhergehenden Ansprüche, dadurch gekennzeichnet, daß das Netz aus Polypropylen, Polyäthylen, einem Polyester oder einer Kombination aus diesen Materialien besteht.

12. Strukturelement nach einem der vorhergehenden Ansprüche, dadurch gekennzeichnet, daß die Öffnungen des Netzes mit einem weiteren Material ausgefüllt sind.

13. Strukturelement nach einem der vorhergehenden Ansprüche, dadurch gekennzeichnet, daß das die Öffnungen des Netzes ausfüllende Material ein Bindemittel enthält.

14. Strukturelement nach einem der vorhergehenden Ansprüche, dadurch gekennzeichnet, daß die Auswölbungen des Gebildes mit einem weiteren Material, wie abgebundenen Gips, Zement, Beton, Holzmehlslurry ausgefüllt sind.

## Claims

1. Three-dimensional structural element which, has a body which is basically plane, has bulges such as knobs, ribs or the like perpendicular to its extent, characterised in that the body comprises at least one net made of a shrunk slit film or sheet of a plastics material.

2. Structural element according to claim 1, characterised in that the slit sheet is an adhesive sheet.

3. Structural element according to one of the foregoing claims characterised in that the body comprises two plastics nets, preferably of different form, materials or the like.

4. Structural element according to claim 3 characterised in that the two nets are directed to extend across one another.

5. Structural element according to one of the foregoing claims characterised in that the body comprises at least one layer of a net and a layer of a fleece, a fleecy fabric, a bundle of threads, a foam sheet, an open pore foam, or a slit aluminium foil.

6. Structural element according to claim 5 characterised in that the body comprises three layers of which the middle layer is a net and the two others layers comprise one or two other materials.

7. Structural element according to claim 5 characterised in that the body comprises three layers of which the two outer layers are each a net and the middle layer comprises another material.

8. Structural element according to one of the foregoing claims characterised in that at least on one side of the body a flat layer is applied to the bulges on it.

9. Structural element according to one of the foregoing claims characterised in that the body is stiffened by a material such as an epoxy resin or the like absorbed into it and cured.

10. Structural element according to one of the foregoing claims characterised in that the net is made of a polyolefin.

11. Structural element according to one of the foregoing claims characterised in that the net is made of polypropylene, polyethylene, a polyester or a combination of these materials.

12. Structural element according to one of the foregoing claims characterised in that the openings in the net are filled with a further material.

13. Structural element according to one of the foregoing claims characterised in that the material filling the openings in the net contains a binder.

14. Structural element according to one of the foregoing claims characterised in that the bulges in the body are filled with a further material such as set plaster, cement, concrete, or wood flour slurry.

## Revendications

1. Elément de construction tridimensionnel qui, en tant que structure plane en soi, présente, perpendiculairement à son extension, des bombages, tels que godets, entretoises ou autres, caractérisé en ce que la structure présente au moins un filet réalisé en un film à fentes rétrécissable en matière plastique.

2. Elément de construction suivant la revendication 1, caractérisé en ce que le film à fentes est un film adhésif.

3. Elément de construction suivant l'une des revendications précédentes, caractérisé en ce que la structure se compose de deux filets en matière plastique, de préférence de réalisation différente, de matériaux ou similaires.

4. Elément de construction suivant la revendication 3, caractérisé en ce que les deux filets sont orientés transversalement l'un par rapport à l'autre.

5. Elément de construction suivant l'une des revendications précédentes, caractérisé en ce que la structure se compose d'au moins une couche d'un filet et d'une couche d'une toison, d'un voile, d'une disposition de fibres, d'un film de mousse, d'une mousse à pores ouverts ou d'un film d'aluminium à fentes.

6. Elément de construction suivant la revendication 5, caractérisé en ce que la structure se compose de trois couches dont la couche centrale est un filet et les deux autres couches sont en un ou en deux autres matériaux.

7. Elément de construction suivant la revendication 5, caractérisé en ce que la structure se compose de trois couches dont les deux couches extérieures sont, chacune, un filet et la couche centrale est en un autre matériau.

8. Elément de construction suivant l'une des revendications précédentes, caractérisé en ce qu'au moins sur l'une des faces de la structure, sur les bombages de celle-ci, est disposée une couche plane.

9. Elément de construction suivant l'une des revendications précédentes, caractérisé en ce que la structure est raidie par un matériau absorbé par celle-ci et durci, tel que résine époxyde ou similaire.

10. Elément de construction suivant l'une des revendications précédentes, caractérisé en ce que le filet est en polyoléfine.

11. Elément de construction suivant l'une des revendications précédentes, caractérisé en ce que le filet est en polypropylène, polyéthylène, un polyester ou une combinaison de ces matériaux.

12. Elément de construction suivant l'une des revendications précédentes, caractérisé en ce que les ouvertures du filet sont remplies d'un autre matériau.

13. Elément de construction suivant l'une des revendications précédentes, caractérisé en ce que le matériau remplissant les ouvertures du filet contient un liant.

14. Elément de construction suivant l'une des revendications précédentes, caractérisé en ce que les bombages de la structure sont remplis d'un autre matériau, tel que plâtre lié, ciment, béton, boue de poudre de bois.
